Europäisches Patentamt

**European Patent Office**

Office européen des brevets

(11) Publication number: **0 102 828**
**A2**

(19)

(12)

# EUROPEAN PATENT APPLICATION

(21) Application number: **83305034.7**

(22) Date of filing: **31.08.83**

(51) Int. Cl.³: **C 10 J 3/52**
**B 01 J 3/02**

(30) Priority: **02.09.82 US 414195**

(43) Date of publication of application:
**14.03.84 Bulletin 84/11**

(84) Designated Contracting States:
**BE DE FR GB NL**

(71) Applicant: **Exxon Research and Engineering Company**
**P.O.Box 390 180 Park Avenue**
**Florham Park New Jersey 07932(US)**

(72) Inventor: **Nahas, Nicholas Charles**
**49 Thornley Drive**
**Chatham New Jersey 07928(US)**

(74) Representative: **Field, Roger Norton et al,**
**ESSO Engineering (Europe) Ltd. Patents & Licences**
**Apex Tower High Street**
**New Malden Surrey KT3 4DJ(GB)**

(54) **A method for withdrawing solids from a high pressure vessel.**

(57) Solids are withdrawn from a pressurised reactor by passing the solids from the reactor to a stripping vessel maintained at a pressure approximately equivalent to the pressure in the reactor wherein the solids are contacted with a volatilised liquid to displace gases. The stripped solids are then passed through a conduit containing valve means into a lockpot pressurised and the volatilised liquid to a pressure approximately equivalent to the pressure in the stripping vessel. The solids-free section of the lockpot communicates with a condenser vessel pressurised with the volatilised liquid to a pressure approximately equivalent to the pressure in the lockpot. After the solids have been passed into the lockpot, the valve means is closed and the volatilised liquid in the condenser is condensed thereby decreasing the pressure in the condenser which simultaneously results in a decrease of pressure in the lockpot. Depressured solids are then removed from the lockpot.

EP 0 102 828 A2

./...

This invention relates to the processing of solids at elevated pressures and is particularly concerned with the removal of hot solid particles from high pressure vessels during coal gasification and similar operations.

Fluidized bed systems for the gasification of coal and similar carbonaceous solids in which coal particles are devolatilized to produce hydrocarbon gases and char and the char is reacted with steam to form synthesis gas, and in some cases methane, have developed in recent years. The reactions involved, which may be carried out in a single vessel or in two or more reactors, are highly endothermic and require that large amounts of heat be supplied. This is generally done by burning a portion of the char, either by injecting oxygen into the fluidized bed, with steam or by withdrawing char from the bed, passing it to a separate combustion zone, and then returning the hot char particles to the fluidized bed reaction vessel. In the process described in U.S. Patent No. 4,094,650, the heat is supplied by recycling carbon monoxide and hydrogen to the gasification zone where they react exothermically to produce methane and heat at a temperature between 1000°F and 1500°F in the presence of an alkali metal-containing catalyst. The gasification processes referred to above result in the production of significant quantities of ash derived from the mineral matter in the feed coal. The ash not carried overhead with the product gases tends to accumulate in the system and must be removed if the process is to operate continuously. Furthermore, if the gasification is carried out in the presence of a catalyst, the ash residue will contain constituents of the catalyst which must normally be

0102828

recovered in order to make the process economically feasible.

There have been several different methods proposed for coping with the ash removal problem. Much of the early coal gasification work was carried out with slagging type gasifiers which were operated at temperatures above the ash fusion point and therefore resulted in the formation of a molten ash which could be quenched and withdrawn as slag from the lower part of the gasifier. Such a system is useful for the removal of ash from gasifiers designed for the production of synthesis gases of low methane content but poses problems where higher BTU product gases are desired. The high temperatures required to melt the ash tend to crack any methane present in the system and hence the BTU content of the product gas will normally be low. A more effective system where gases containing significant quantities of methane are required is to operate at temperatures below the ash fusion point and withdraw a portion of the char solids from the gasifier in order to keep the ash content of the system at satisfactory levels and, in the case of a catalytic process, to enable the solids to be treated for the recovery of catalyst constituents.

The intermittent withdrawal of hot char solids by means of lockhoppers and similar equipment have been proposed as a means for removing ash from gasifiers and similar reaction vessels but poses problems because it may result in operating upsets in the gasification process and because it requires the use of flow shut-off valves which must operate at high temperatures. Suitable valves are difficult to design and maintain. Furthermore, if such valves are used to depressure the dry solids, the decreasing pressure will cause the bed of solids to expand and particles will be entrained, usually at high velocities, through the valves. The flow of entrained solids through a pressure letdown valve in such a manner will normally cause erosion or plugging and result in subsequent mechanical failure. An alternative approach is to form a slurry of solids and a liquid, typically water, in the lower portion of the gasifier beneath the high temperature fluidized bed and to depressure the slurry across a series of valves to permit continuous withdrawal of the solids from the system. This method of withdrawal, however, is disadvantageous if it is desired to burn the char particles removed in order to recover their fuel value or for other purposes.

The present invention provides an improved method for the withdrawal of solid particles from a high pressure vessel which at least in part avoids the difficulties outlined above. In accordance with the invention, it has now been found that particulate solids can be removed from a pressurized vessel in a dry and depressured state by passing the solids to a stripping zone maintained at a pressure approximately equivalent to the pressure in the pressurized vessel; contacting the solids in the stripping zone with a volatilized liquid, normally steam, to displace any associated gases that accompany the solids from the pressurized vessel; passing the solids from the stripping zone through a conduit containing valve means into a lockpot pressurized with the volatilized liquid to a pressure approximately equivalent to the pressure in the stripping zone and wherein the solids-free section of the lockpot communicates with a condenser vessel which is pressurized – with the volatilized liquid to a pressure approximately equivalent to the pressure in the lockpot;

closing the valve means in the conduit between the stripping zone and the lockpot; condensing the volatilized liquid in the condenser vessel to decrease the pressure in the condenser vessel and create a differential pressure between the lockpot and the condenser vessel such that volatilized liquid flows from the lockpot to the condenser vessel thereby decreasing the pressure in the lockpot; and withdrawing dry and depressured solids from the lockpot. The stripping zone may be located either inside or outside the pressurized vessel.

In a preferred embodiment of the invention, the pressurized vessel is a fluidized bed coal gasification reactor in which coal or similar carbonaceous solids are reacted with steam in the presence of a catalyst. The char particles produced in the gasifier, which will normally be comprised of carbonaceous material, ash and catalyst residues, are passed to a stripping vessel external to the gasifier where they are contacted with steam to displace any gases associated with the solids. The lockpot and the condenser are also pressurized with steam and after the valve means in the conduit between the stripping vessel and the lockpot is closed, the steam in the condenser vessel is condensed by introducing cooling water into the vessel. The char particles removed from the lockpot will be dry and depressured and will be suitable for treatment to recover catalyst constituents, especially by burning the carbon remaining in the residue and then treating the combusted particles with water or other aqueous medium to remove the catalyst constituents.

The process of the invention provides a method for removing solids from pressurized vessels in such a way as to depressure the solids without utilizing a pressure letdown valve while at the same time maintaining the solids in a dry form. Furthermore, the invention allows the lockpot to be operated in such a manner that loss of process gas is avoided without requiring gas compression to refill the pot.

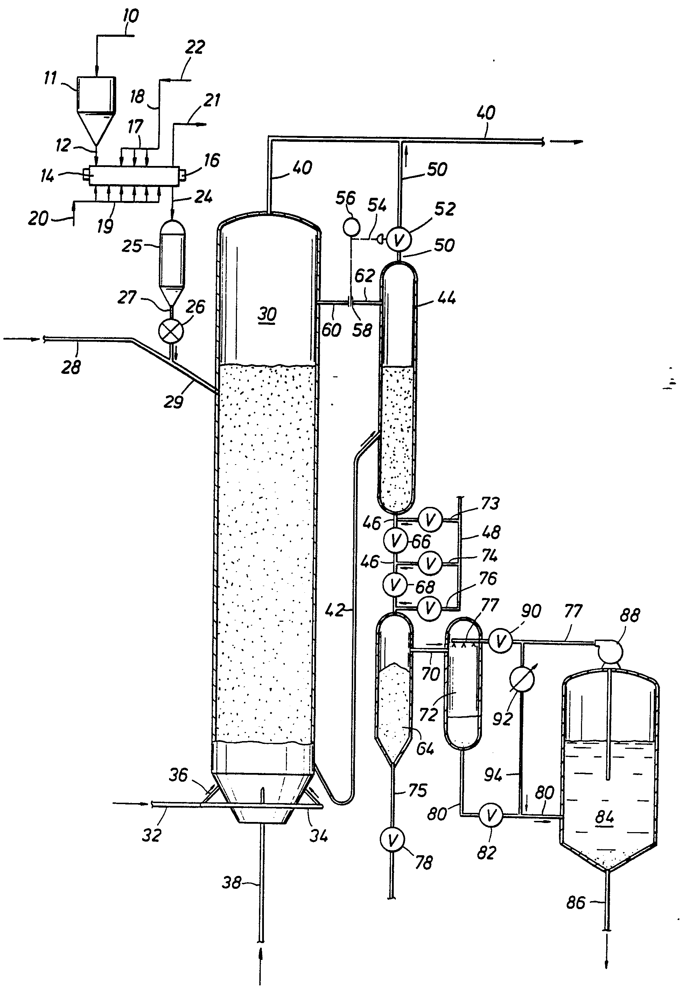

The drawing is a schematic diagram of a solids withdrawal system in which char particles are removed from a fluidized bed coal gasifier in accordance with the process of the invention.

.The process depicted in the drawing is one for the production of methane by the gasification of bituminous coal, subbituminous coal, lignitic coal or similar carbonaceous solids with steam at high temperature and elevated pressure in the presence of a catalyst. It will be understood that the invention is not restricted to the particular process shown and can be used in conjunction with processes for the carbonization of coal and similar feed solids, for the gasification of petroleum coke and similar carbonaceous solids, for the retorting of oil shale and the like, for the partial combustion of carbonaceous solids, and in other high temperature processes in which particles must be continuously removed from a pressurized vessel for further treatment or discharge from the system.

In the process shown in the drawing, the solid carbonaceous feed material such as bituminous coal, subbituminous coal, lignitic coal or the like that has been crushed to a particle size of about 8 mesh or smaller on the U.S. Sieve Series Scale is passed into line 10 from a feed preparation plant to a storage facility that is not shown in the drawing. The solids introduced into line 10 are fed into a hopper or similar vessel 11 from which they are passed through line 12 into feed preparation zone 14. This zone contains a screw conveyor or similar device, not shown in the drawing, that is powered by motor 16, a series of spray nozzles or similar devices 17 for the spraying of catalyst-containing solution supplied through line 18 onto the solids as they are moved through the preparation zone via the conveyor, and a similar set of nozzles or the like 19 for the introduction of a hot dry gas, such as flue gas, into the preparation zone. The hot gas, supplied through line 20, serves to heat the impregnated solids and drive off the moisture. A mixture of water vapor and gases is withdrawn from zone 14 through line 21 and passed to a condenser, not shown, from which water may be recovered for use as make-up or the like. The majority of catalyst-containing solution is recycled through line 22 from the catalyst recovery portion of the process, which is not shown in the drawing.

Normally, the water-soluble catalyst will be an alkali metal hydroxide, carbonate or similar alkali metal salt active in promoting the steam gasification of coal and similar carbonaceous materials. Potassium carbonate is particularly preferred. Sufficient catalyst-containing solution is introduced into the preparation zone 14 to provide from about 3 to about 50 weight percent of the catalyst constituents on the coal or other carbonaceous solids. From about 5 to about 20 weight percent is generally adequate. The dried impregnated solid particles prepared in zone 14 are withdrawn through line 24 and passed to a closed hopper or a similar vessel 25. From here they are discharged through a star wheel feeder or equivalent device 26 in line 27 at an elevated pressure sufficient to permit their entrainment into a stream of high pressure steam, recycle product gas, inert gas, or other carrier gas introduced in the line 29 via line 28. The carrier gas and entrained solids are passed through line 29 into gasifier 30. In lieu of or in addition to hopper 25 and star wheel feeder 26, the feed system may employ parallel lockhoppers, pressurized hoppers, aerated standpipes operated in series, or other apparatus to raise the input feed solids stream to the required pressure level.

Gasifier 30 comprises a refractory lined vessel containing a fluidized bed of carbonaceous solids extending upward within the vessel above an internal grid or similar distribution device not shown in the drawing. The bed is maintained in the fluidized state by means of steam introduced through line 32, manifold 34 and peripherally spaced injection lines and nozzles 36 and by means of recycle hydrogen and carbon monoxide introduced through bottom inlet line 38. The particular injection system shown in the drawing is not critical, hence other methods for injecting the steam and recycle hydrogen and carbon monoxide may be employed.

The injected steam reacts with carbon in the feed material in the fluidized bed in gasifier 30 at a temperature within the range between about 800°F and about 1600°F, preferably between about 1100°F and about 1400°F, and at a pressure between about 100 psig and about 2000 psig, preferably between about 200 psig and about 800 psig. Due to equilibrium conditions existing in the bed as a result of the presence of the catalyst and the recycle hydrogen and carbon monoxide injected near the lower end of the bed, the net reaction products will normally consist essentially of methane and carbon dioxide. The ratio of methane to carbon dioxide in the raw product gas thus formed will preferably range from about 1.0 to about 1.4 moles per mole, depending upon the amount of hydrogen and oxygen in the feed coal or other carbonaceous solids.

The gas leaving the fluidized bed in gasifier 30 passes through the upper section of the gasifier, which serves as a disengagement zone where particles too heavy to be entrained by the gas leaving the vessel are returned to the bed. If desired, this disengagement zone may include one or more cyclone separators or the like for removing relatively large particles from the gas. The raw product gas withdrawn from the upper part of the gasifier through line 40 will normally contain methane, carbon dioxide, hydrogen, carbon monoxide, and unreacted steam. Hydrogen sulfide, ammonia and other contaminants formed from the sulfur and nitrogen contained in the feed material and entrained fines will also be present in the raw product gas. This gas is introduced into cyclone separators or similar devices, not shown in the drawing, for the removal of particulates. After entrained solids have been separated from the raw product gas, the gas stream may be passed through suitable heat exchange equipment for the recovery of heat and then processed for the removal of acid gases. Once this has been accomplished, the remaining gas, consisting primarily of methane, hydrogen and carbon monoxide, may be cryogenically separated into a product methane stream and a recycle stream of hydrogen and carbon monoxide which is returned to the gasifier through line 38. Conventional gas processing equipment can be used. Since a detailed description of this downstream gas processing portion of the process is not necessary for an understanding of the invention, it has been omitted.

The fluidized bed in gasifier 30 is comprised of char particles formed as the solid carbonaceous feed material undergoes gasification. The composition of the char particles will depend upon the amount of mineral matter present in the carbonaceous material fed to the gasifier, the amount of the catalyst constituents inpregnated into the feed material, and the degree of gasification that the char particles undergo while in the fluidized bed. The lighter char particles, which will have a relatively high content of carbonaceous material, will tend to remain in the upper portion of the fluidized bed. The heavier char particles, which will contain a relatively small amount of carbonaceous material and a relatively large amount of ash and catalyst residues, will tend to migrate toward the bottom of the fluidized bed. It is desirable to withdraw a portion of the heavier char particles from the bottom portion of the fluidized bed in order to eliminate ash and thereby prevent it from building up within the gasifier and other vessels in the system. It is also desirable to treat the heavier char particles to recover catalyst constituents for recycle to the process through line 22.

Withdrawal of the heavier char solids from the pressurized gasifier is normally accomplished by slurrying the solids in a liquid, typically water, and withdrawing the slurry through a pressure letdown valve. In some cases, it may be desirable to remove the char particles in a dry form in order to recover fuel value by burning residual carbon. Unfortunately, dry pressure letdown through a valve is difficult. A decreasing pressure causes the fluidized bed of solids to expand and results in entrainment of the particles at high velocities through the valve. This, in turn, will normally result in erosion, plugging and eventual mechanical failure. It has now been found that the pressure on a bed of dry solids can be relieved without the flow of the pressurizing gas through a valve by passing the solids from the pressurized vessel to a stripping vessel maintained at a pressure approximately equivalent to the pressure in the pressurized vessel wherein the solids are contacted with a volatilized liquid, preferably steam, to displace any gases associated with the solids. The stripped solids are then passed from the stripping vessel through a conduit containing valve means into a lockpot pressurized with the same volatilized liquid to a pressure approximately equivalent to the presure in the stripping vessel. The solids-free section of the lockpot communicates with a condenser vessel also pressurized with the same volatilized liquid to a pressure approximately equivalent to the pressure in the lockpot. After the solids have been passed into the lockpot, the valve means in the conduit between the stripping vessel and the lockpot is closed and the volatilized liquid in the condenser vessel is condensed to decrease the pressure in the condenser vessel and to create a differential pressure between the lockpot and the condenser vessel. This differential pressure causes volatilized-liquid to flow from the lockpot to the condenser valve thereby decreasing the pressure in the lockpot. Dry, depressured solids are then withdrawn from the depressured lockpot.

Referring again to the drawing, char particles containing carbonaceous material, ash and alkali metal residues are withdrawn from the fluidized bed in gasifier 30 through transfer line 42, which does not contain a valve, and passed into stripper or similar vessel 44 until a pressure balance is achieved between the gasifier and the stripper. In the stripper the char particles are contacted and fluidized with steam that is introduced into the vessel from manifold 48 via lines 46 and 73. As the steam flows upwardly through the fluidized particles, it strips and removes gases that are carried into the stripper from the gasifier in the void spaces of the char particles. The steam and stripped gases are removed overhead from stripper 44 through line 50 and valve 52 and combined in line 40 with the effluent from gasifier 30.

The pressure in stripper 44 is controlled such that the difference in pressure between the stripper and gasifier 30 controls the level of char solids in the stripper. Normally, the pressure in the stripper will be maintained approximately equivalent to the pressure in the gasifier. If the pressure in the stripper becomes too high, the solids will tend to backflow through line 42. On the other hand, if the pressure in the stripper is too low, it will allow solids to flow from the gasifier into the stripping vessel. The desired pressure is maintained in the stripper by introducing pressurized steam through line 46 and using valve 52 to control the amount of steam and stripped gases leaving the vessel. In order to continuously control the amount of gases leaving stripper 44 through valve 52 such that the pressure in the stripper is always approximately equivalent to that in the gasifier, both the gasifier and stripper are connected to differential pressure transmiter 58 via lines 60 and 62, respectively. The differential pressure transmitter is electrically connected to differential pressure regulating controller 56 such that differential pressure measured by transmitter 58 can be compared to a predetermined differential pressure, which is normally very close to zero. The differential pressure regulating controller then sends a signal through line 54 to valve 52 to increase or decrease the amount of gases leaving stripper 44 in order to maintain the differential pressure measured by transmitter 58 approximately equivalent to the predetermined differential pressure.

Stripper 44 communicates with lockpot 64 via line 46, which contains block valves 66 and 68. The lockpot, in turn, is connected via line 70 to condenser 72. The entrance to line 70 is situated in lockpot 64 at a position above the top of the bed of solids that is formed in the pot. Before the solids in the fluidized bed in stripper 44 can be passed into the lockpot, the lockpot, condenser and line 46 between valve 66 and the lockpot must be pressurized with steam to a pressure approximately equivalent to the pressure in stripper 44. This is accomplished by closing valve 66, opening valve 68 and passing high pressure steam from manifold 48 through lines 74 and 76 into line 46, lockpot 64 and condenser 72. Once the required pressure level is obtained, valve 66 may be opened to allow the solids in stripper 44 to flow through line 46 into lockpot 64. Sufficient solids are allowed to pass from the stripper into the lockpot to fill the lockpot to a level below line 70. After the lockpot has been filled with solids, valves 66 and 68 are closed. Normally, the solids in stripper 44 are not allowed to pass through valves 66 and 68 until they have been sufficiently cooled to avoid damaging the valves. Ordinarily, such valves can be designed to withstand temperatures as high as about 600°F. Thus, sufficient steam must be passed from manifold 48 through lines 73 and 46 into stripper 44 to cool the solids below about 600°F.

After lockpot 64 has been filled and valves 66 and 68 closed, line 46 and its two valves are continuously maintained under steam pressure so that any leakage through the valves will be steam. The lockpot is depressured by spraying cooling water into condenser 72 through line 77. The water causes steam in vessel 72 to condense thereby lowering the pressure in the vessel. Since lockpot 64 and condenser 72 communicate via line 70 and are both maintained at a pressure approximately equivalent to the pressure in stripper 44 and in gasifier 30, the decrease in pressure in vessel 72 creates a differential pressure between lockpot 64 and vessel 72 which causes steam in lockpot 64 to flow through line 70 into vessel 72. This in turn, decreases the pressure in lockpot 64. In general, sufficient water is sprayed into condenser 72 to condense sufficient steam to decrease the pressure in lockpot 64 to the desired value. Normally, a steam pressure between about 2 and 3 psi is left in the lockpot in order to force the dry, depressured solids through line 75 and valve 78 to their desired destination.

During the depressuring of lockpot 64 and condenser 72, fine particulate solids in lockpot 64 will be carried with flowing steam from the lockpot through line 70 into the condenser. These fine particles will be captured in the downfalling spray of water introduced through line 77 into the condenser and will accumulate with the water in the bottom of the vessel. After the condenser and lockpot have been depressurized, the slurry of fines and water formed in the bottom of the condenser is withdrawn through line 80 and passed through valve 82 into settler 84. Here the solids collect in the bottom of the settler and can be removed from the system through line 86. The water collected in the settler is recycled to the condenser via pump 88, line 77 and valve 90. In order to remove heat, which the water picks up in condensing the steam in vessel 72, a portion of the water from settler 84 is continuously circulated through cooler 92 and returned to the settler

via lines 94 and 80. The flow of water into condenser 72 through line 77 will only be needed when it is necessary to depressure lockpot 64. When water is no longer required in the condenser, valves 90 and 82 may be closed so that all of the water is continuously circulated from settler 84 through cooler 92 and back to the settler.

At the completion of a depressuring cycle, the flow of water through line 77 into vessel 72 is termin- ated by closing valve 90. The slurry of fines and water that has accumulated in the bottom of vessel 72 is passed through valve 82 into settler 84. When the condenser is emptied of water, valve 82 is shut. Dry depressured solids are removed from lockpot 64 through line 75 and valve 78. Since the pressure in vessel 64 is low, valve 78 does not undergo significant erosion because of the passage of particles entrained in a gas at high velocities. The char particles removed from the lockpot can now be processed to recover residual fuel value by burning off any carbon remaining in the solids. The resultant combusted particles are then treated to recover catalyst constituents for recycle to the process via line 22. The slurry removed from settler 84 through line 86 can also be sent to the catalyst recovery portion of the process. Once the lockpot is emptied, valve 78 is closed and steam is reintroduced into lockpot 64 and condenser 72 via manifold 48, and lines 74, 76 and 46 to repressure the system and prepare for depressurizing another load of solids introduced into the lockpot from stripper 44.

In the embodiment of the invention shown in the drawing and described above, steam is used to strip the solids in stripper 44 and to pressurize lockpot 64 and condenser 72. It will be understood that other vaporized liquids besides steam can be used in the process of the invention. Examples of such substances include vaporized benzene, toluene, other light hydrocarbons, alcohols, organic solvents and the like. It will be understood that the liquid passed into condenser 72 through 77 will be the liquid form of the vapor present in the condenser.

In the embodiment of the invention shown in the drawing and described above, the lockpot and condenser are depressured by passing cool liquid into condenser 72 where it causes the vaporized form of the same liquid to condense. It will be understood that this condensing step can be carried out in any manner which will allow the vaporized liquid in the condenser to be converted into its liquid form. Examples of such methods include surrounding the condenser vessel with coils through which any cool liquid can be passed in order to cool the inside of the condenser and cause the vaporized liquid to condense. Other methods of cooling vessel 72 to cause the vapors to condense are within the scope of this invention.

It will be apparent from the foregoing, that the invention provides a process for removing solids from a pressurized vessel in a dry form in such a manner as to avoid pressure letdown of the solids through a valve. As a result, erosion and plugging problems are avoided and mechanical failure of the valve is obviated thereby resulting in longer operating runs.

CLAIMS:

1. A process for withdrawing solids from a pressurized vessel in a dry and depressured state which comprises:

(a) passing said solids from said pressurized vessel to a stripping zone maintained at a pressure approximately equivalent to the pressure in said pressurized vessel, wherein said solids are contacted with a volatilized liquid thereby displacing any gases associated with said solids;

(b) passing the stripped solids from said stripping zone through a conduit containing valve means into a lockpot pressurized with said volatilized liquid to a pressure approximately equivalent to the pressure in said stripping zone, wherein the solids-free section of said lockpot communicates with a condenser vessel pressurized with said volatilized liquid to a pressure approximately equivalent to the pressure in said lockpot;

(c) closing said valve means in said conduit between said stripping zone and said lockpot;

(d) condensing said volatilized liquid in said condenser vessel to decrease the pressure in said condenser vessel thereby creating a differential pressure between said lockpot and said condenser vessel, wherein said differential pressure causes said volatilized liquid to flow from said lockpot to said condenser vessel thereby decreasing the pressure in said lockpot; and

0102828

- 17 -

(e)  withdrawing dry, depressured solids from said lockpot.

2.  A process according to claim 1 in which said solids comprise char particles and said pressurised vessel comprises carbonaceous solids gasification reactor.

3.  A process according to claim 2 in which said carbonaceous solid is coal and said reactor is a coal-gasification reactor containing a fluidised bed of char particles.

4.  A process according to any one of claims 1-3 in which said volatilised liquid is condensed in said condenser vessel by introducing the liquid form of said volatilised liquid into said condenser vessel.

5.  A process according to any one of claims 1-4 in which said volatilised liquid comprises steam.

6.  A process according to any one of claims 1-5 in which said volatilised liquid compresses steam and said steam is condensed in said condenser vessel by introducing water into said vessel.

7.       A process according to claim 6 in which additionally water and entrained fine particles are passed from said condenser vessel into a settling vessel wherein said fine particles are separated from said water and said water is cooled and reused in said condenser vessel.

8.       A process according to any one of claims 1-7 in which the amount of volatilised liquid condensed in said condenser vessel is such that the pressure in said lockpot is sufficiently high to force said dry, depressured solids from said lockpot.

9.       A process according to any one of claims 1-8 in which the pressurised vessel is a fluidised bed gasifier in which coal is gasified in the presence of a gasification catalyst, said solids are char particles containing catalyst residues produced in said gasifier and said fine particles separated in said settling vessel are passed to a catalyst recovery system.